Europäisches Patentamt

European Patent Office

Office européen des brevets

(19)

(11) Veröffentlichungsnummer: **0 027 830**
**B1**

## (12) EUROPÄISCHE PATENTSCHRIFT

(45) Veröffentlichungstag der Patentschrift:
01.08.84

(21) Anmeldenummer: **79104207.0**

(22) Anmeldetag: **30.10.79**

(51) Int. Cl.³: **C 03 B 9/193**, C 03 B 9/14

(54) **Maschine zur Herstellung von Hohlglasartikeln.**

(43) Veröffentlichungstag der Anmeldung:
**06.05.81 Patentblatt 81/18**

(45) Bekanntmachung des Hinweises auf die Patenterteilung:
**01.08.84 Patentblatt 84/31**

(84) Benannte Vertragsstaaten:
**AT BE CH FR GB IT LU NL SE**

(56) Entgegenhaltungen:
**DE - A - 2 264 695**
**DE - B - 2 453 038**
**US - A - 2 151 876**
**US - A - 3 216 813**
**US - A - 3 329 492**
**US - A - 4 152 133**

**THE GLASS INDUSTRY, Band 58, Nr. 10, Oktober 1977**
**New York J. FOYIL "The Heye-Maul 1-2 Machine"**
**Seiten 14 bis 18**

(73) Patentinhaber: **VEBA-GLAS Aktiengesellschaft,**
**Ruhrglasstrasse 50, D-4300 Essen 12 (DE)**

(72) Erfinder: **Knoth, Werner Dieter, Byfangerstrasse 175,**
**D-4300 Essen 15 (DE)**
Erfinder: **Münker, Helmut, Rüstermark 27,**
**D-4300 Essen 1 (DE)**

(74) Vertreter: **Spalthoff, Adolf, Dipl.-Ing.,**
**Pelmanstrasse 31 P.O. Box 34 02 20,**
**D-4300 Essen 1 (DE)**

### Beschreibung

Die Erfindung betrifft eine Maschine zur Herstellung von Hohlglasartikeln mit in einer Reihe angeordneten Produktionsstationen, welche aus je einer feststehenden Vorform und zwei oder mehreren dieser zugeordneten Fertigformen bestehen, wobei Glastropfen in den Vorformen zu Külbeln vorgeblasen oder gepresst werden und die Külbel anschliessend unmittelbar in die zugehörigen Fertigformen umgesetzt, in diesen fertiggeblasen und danach aus diesen entfernt werden.

Die Herstellung von Hohlglasartikeln geschieht wegen des grossen Verformungsgrades eines Glastropfens im allgemeinen schrittweise, und zwar meistens in zwei Stufen. Die Leistungsfähigkeit der bekannten Maschinen wird bestimmt durch die Geschwindigkeit, mit der die Glaskörper hergestellt werden können. Diese Geschwindigkeit wird begrenzt durch die Wärmeabfuhr in der Wandung des herzustellenden Hohlglasartikels. Wenn zuviel Wärme im Glaskörper verbleibt, so deformiert sich dieser nach der Entnahme aus der Form wieder und ist damit unbrauchbar. Wird dagegen dem Glaskörper zuviel Wärme entzogen, so erfolgt seine Ausformung in der Fertigform nur unvollständig und ist daher ebenfalls nicht brauchbar. Das Glas benötigt wegen seiner relativ schlechten Wärmeleitfähigkeit eine bestimmte Zeit, um nach der ersten Verformungsstufe zu einer in etwa gleichmässigen Temperaturverteilung über den Querschnitt der Wandung zu gelangen, und zwar infolge eines Ausgleichs vom mittleren Bereich der Wandung zu den Aussenseiten hin, da sich letztere beim Verformungsprozess stärker abkühlen als der innere Querschnittsbereich. Diese Wiedererwärmungszeit begrenzt den gesamten Herstellungsprozess, so dass von daher einer Leistungserhöhung Grenzen gesetzt sind.

Durch die US-A-3 216 813 ist eine sog. IS-Maschine der gattungsgemässen Art bekannt, bei welcher einer Vorform jeweils zwei Fertigformen zugeordnet sind, die sich jeweils auf gegenüberliegenden Seiten der Vorform befinden. Diese bekannte Maschine hat jedoch den Nachteil, dass sie in ihrem Aufbau vergleichsweise aufwendig ist, da die Vorrichtungen zum Umsetzen der Külbel auf beiden Seiten der Vorformen, d.h. also doppelt vorhanden sein müssen.

Von diesem Stand der Technik ausgehend liegt der Erfindung die Aufgabe zugrunde, eine Maschine der eingangs genannten Art dahingehend zu verbessern, dass diese in ihrem Aufbau wesentlich einfacher gestaltet ist.

Gemäss der Erfindung wird dies dadurch erreicht, dass die der Vorform zugeordneten Fertigformen einer jeden Produktionsstation auf einem Drehteller angeordnet sind. Diese Ausführung ermöglicht eine Anordnung auf engstem Raum, so dass auch ein nachträglicher Umbau bereits vorhandener Maschinen in einfacher Weise möglich ist mit der Folge, die Leistung einer derartigen Maschine ganz erheblich zu steigern. Auch sind keine zusätzlichen Umsetzeinrichtungen erforderlich, weil die vorhandenen Umsetzeinrichtungen vollauf genügen, um die Külbel von den Vorformen in die zugeordneten Fertigformen überzusetzen.

Durch die DE-C-478 498 ist eine Ausführungsform einer Maschine zur Herstellung von Hohlglasartikeln bekannt, bei welcher sowohl die Vorformen als auch die Fertigformen auf einem Drehteller getrennt voneinander angeordnet sind. Insgesamt sind drei Vorformen und sechs Fertigformen vorgesehen. Beide Formenteller, also sowohl der für die Vorformen als auch der für die Fertigformen, sind um zwei getrennte Achsen drehbar, wobei beide Drehteller zusammen eine Maschine bilden. Diese Entgegenhaltung vermag jedoch keinerlei Anregung zu geben, die gattungsgemässe IS-Maschine entsprechend der Lehre der Erfindung auszugestalten, weil nach dem Arbeitsprinzip der durch diese bekanntgewordenen Maschine zur Herstellung von Hohlglasartikeln sowohl die Vorformen als auch die Fertigformen eine Rotationsbewegung ausführen, während nach dem Arbeitsprinzip der gattungsgemässen Entgegenhaltung die Vorformen und Fertigformen feststehend parallel zueinander angebracht sind.

Durch die DE-A-2 264 695 ist ein Verfahren und eine Vorrichtung zur Herstellung von Hohlglasgegenständen nach der Press-Blas-Methode bekannt. Bei der bekannten Vorrichtung ist eine Tropfeneinspeis- und Vorpressstation mit vier nebeneinander angeordneten Arbeitsstellen vorgesehen. Nach dem Vorpressen werden über die ruhende Vorform normalerweise in einer Führungsbahn bewegte Wagen gebracht, welche die Mündungsringe tragen. Die Wagen übernehmen die Külbel und werden über Weichen in einer geraden Bahn zusammengefasst, wo sie wegen der notwendigen Verweilzeit dicht aneinandergereiht eine Rückerwärmungsstrecke durchlaufen. Am Ende der geraden Strecke werden die Wagen im Abstand der Umfangssteilung auf die Umfangsgeschwindigkeit einer Drehtischeinheit gebracht, die mit mehreren Fertigblasstationen bestückt ist. Während des Durchlaufens dieser Drehtischeinheit werden die Wagen in herkömmlicher Weise unter Einhaltung von gleichen Abständen mit konstanter Bahngeschwindigkeit weiterbewegt. Über eine Umlenkstation werden die Wagen mit den fertig ausgeblasenen Hohlglasgegenständen wieder in dichter Folge einer geraden Transportbahn zugeführt, auf der eine Abkühlung stattfindet, bevor die fertigen Hohlglasgegenstände entweder aus dem stillstehenden oder bewegten Wagen auf ein Förderband abgegeben werden. Diese bekannte Ausführung weist somit zwischengeschaltete gerade Tranpsortbahnen zwischen Vorformen einerseits und Fertigformen anderseits auf, auf denen die Külbel aneinandergereiht eine Rückerwärmungsstrecke durchlaufen, was vergleichsweise aufwendig ist.

Ein wesentlicher Vorteil der erfindungsgemässen Lehre besteht darin, dass durch die Vergrösserung der Verweilzeit des Külbels in der Fertigform eine Vergleichmässigung der Temperatur über den gesamten Querschnitt der Wandungen des herzustellenden Hohlglasartikels erreicht wird, welche für die Weiterverarbeitung eine optimale Voraussetzung darstellt.

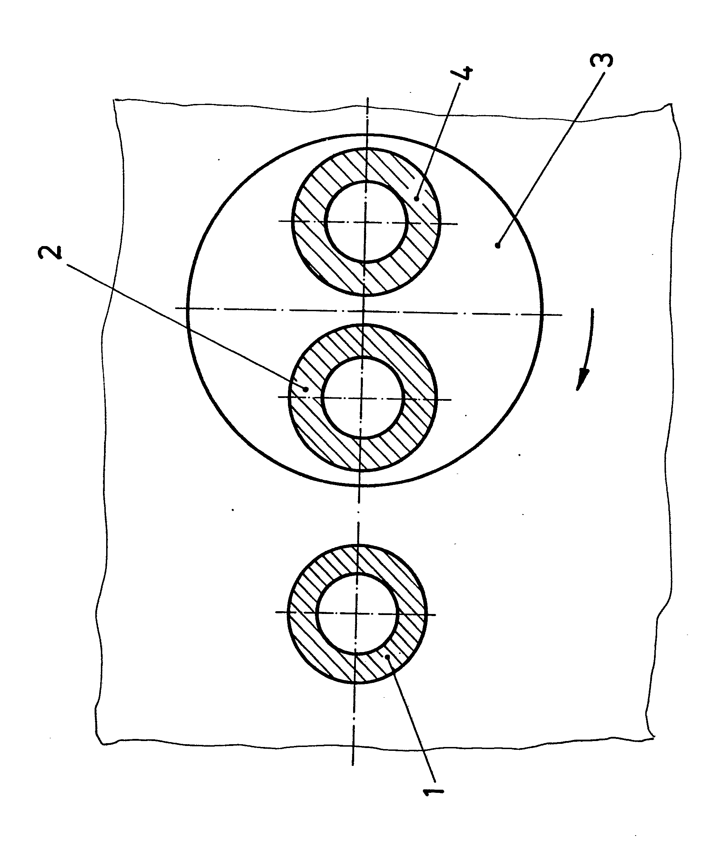

Ein Ausführungsbeispiel der Erfindung ist an Hand der Zeichnung näher erläutert, und zwar zeigt diese in schematischer Darstellung die Draufsicht einer Station als Ausschnitt aus einer Reihe von Produktionsstationen einer an sich bekannten Maschine.

Mit 1 ist die Vorform bezeichnet, in die ein Glastropfen fällt, der dort seine Formgebung zum sog. Külbel durch Vorblasen oder Pressen erhält. Nach Öffnen der Vorform wird das Külbel umgesetzt in die Fertigform 2, die sich auf dem Drehteller 3 befindet, auf dem eine weitere Fertigform 4 angeordnet ist. Nachdem das Külbel aus der Vorform 1 in die Fertigform 2 übergesetzt ist, führt der Drehteller 3 eine Drehung um 180° aus, so dass die Fertigform 4 in die Stellung vor der Vorform 1 gelangt. In der in der Zeichnung dargestellten Stellung der Fertigform 4 erfolgt das endgültige Ausblasen des in der Form befindlichen Hohlglasartikels und dessen Entnahme. Durch die Zuordnung zweier Fertigformen 2, 4 zu einer Vorform 1 ergibt sich eine Verdoppelung der Standzeit und damit die Erzielung einer etwa gleichmässigen Temperaturverteilung über den Querschnitt der Wandung des Hohlglasartikels, unter gleichzeitiger Erhöhung der Leistungsfähigkeit der Maschine auf das Doppelte.

Die erfindungsgemässe Vorrichtung ist einfach in ihrem Aufbau und kann ohne weiteres in die bekannten Maschinen eingebaut werden, so dass sich deren Leistungsfähigkeit wesentlich erhöht.

**Patentanspruch**

Maschine zur Herstellung von Hohlglasartikeln mit in einer Reihe angeordneten Produktionsstationen, welche aus je einer feststehenden Vorform (1) und zwei oder mehreren dieser zugeordneten Fertigformen (2, 4) bestehen, wobei Glastropfen in den Vorformen (1) zu Külbeln vorgeblasen oder gepresst werden und die Külbel anschliessend unmittelbar in die zugehörigen Fertigformen (2, 4) umgesetzt, in diesen fertiggeblasen und danach aus diesen entfernt werden, dadurch gekennzeichnet, dass die der Vorform (1) zugeordneten Fertigformen (2, 4) einer jeden Produktionsstation auf einem Drehteller (3) angeordnet sind.

**Claim**

Machine for manufacturing hollow glass articles and having disposed in a series, production stations which consist in each case of a fixed premould (1) and, associated therewith, two or more finished moulds (2, 4), glass drops being preblown or pressed into parisons in the pre-mould (1), after which the parisons are transferred directly to the associated finished moulds (2, 4), are completely blown therein and are subsequently removed therefrom, characterised in that the finished moulds (2, 4) associated with the premould (1) and relating to each production station are disposed on one turntable (3).

**Revendication**

Machine pour la fabrication d'articles en verre creux comprenant des postes de production disposés en une rangée et formés respectivement d'un moule ébaucheur (1) fixe et de deux ou plus de deux moules finisseurs (2, 4) associés au moule ébaucheur, des gouttes de verre étant façonnées dans les moules ébaucheurs (1) par soufflage ou pressage en paraisons et les paraisons étant ensuite directement transférées dans les moules finisseurs (2, 4) associés, soumis à un façonnage final par soufflage dans ces derniers et retirés des moules finisseurs, caractérisée par le fait que les moules finisseurs (2, 4) associés au moule ébaucheur (1) de chaque poste de production sont disposés sur un plateau rotatif (3).

0 027 830